# EUROPÄISCHE PATENTSCHRIFT

(11) **EP 0 730 762 B1**
(45) Veröffentlichungstag und Bekanntmachung des Hinweises auf die Patenterteilung: **22.07.1998**
(21) Anmeldenummer: 95900617.2
(22) Anmeldetag: 10.11.1994
(51) Int. Cl.: G06F 3/023

(54) **TASTATUR, INSBESONDERE FOLIENTASTATUR**
KEYBOARD, IN PARTICULAR A MEMBRANE KEYBOARD
CLAVIER, NOTAMMENT CLAVIER A TOUCHES A MEMBRANE

(30) Priorität: 23.11.1993 DE 9317905 U
(43) Veröffentlichungstag der Anmeldung: 11.09.1996
(73) Patentinhaber: Strolo, Lothar, 32756 Detmold (DE)
(72) Erfinder: Strolo, Lothar, 32756 Detmold (DE)
(74) Vertreter: Eikel, Cordula
(86) Internationale Anmeldenummer: DE9401330
(87) Internationale Veröffentlichungsnummer: WO9514967

(56) Entgegenhaltungen:
- EP-A- 0 134 966
- WO-A-85/04994
- DE-A- 3 735 331
- DE-U- 9 316 733
- LU-A- 88 024
- US-A- 4 689 761
- US-A- 5 081 628
- US-A- 5 098 110
- US-A- 5 220 521
- RESEARCH DISCLOSURE, Nr.342, Oktober 1992, HAVANT GB Seite 808 '342117 - Interference elimination for remote keyboards for computers'
- PATENT ABSTRACTS OF JAPAN vol. 010, no. 284 (P-501) 26. September 1986 & JP,A,61 103 230 (NEC CORP.) 21. Mai 1986
- PATENT ABSTRACTS OF JAPAN vol. 005, no. 185 (P-091) 25. November 1981 & JP,A,56 111 936 (CANON INC.) 4. September 1981
- PATENT ABSTRACTS OF JAPAN vol. 017, no. 016 (P-1468) 12. Januar 1993 & JP,A,04 243 408 (SEIKO EPSON CORP.) 31. August 1992
- PATENT ABSTRACTS OF JAPAN vol. 010, no. 169 (P-468) 14. Juni 1986 & JP,A,61 020 118 (NIPPON DENKI K.K.) 28. Januar 1986

## Beschreibung

Die Erfindung betrifft eine Tastatur, insbesondere Folientastatur, zur Ansteuerung von zu bedienenden Geräten, mit einer zeilen- und spaltenweise abfragenden Tastenmatrix, insbesondere zur Ansteuerung eines PC (Personal Computer), wobei zur Bedienung erforderliche Ansteuersignale von einem der Tastatur zugeordneten Sender und einem dem zu bedienenden Gerät zugeordneten Empfänger drahtlos durch im Infrarotbereich liegende Lichtimpulse übertragbar sind.

Stationäre Bedienfelder, z.B. Tastaturen, werden seit langem in allen Bereichen der Technik eingesetzt, z.B. in den Bereichen der Automatisierung, des Maschinenbaus, der Steuerungstechnik, der Meßtechnik, der Medizintechnik, der Kommunikationstechnik und in der Büroautomatisierung.

Seit Jahren werden zunehmend Bedienfelder mit Folientastaturen verwendet. Durch ständige innovative Entwicklung dieser Folientastaturen wurde dieses zuverlässige elektronische Bauelement in den vergangenen zwanzig Jahren zu einer wichtigen Schnittstelle für die Dateneingabe und für den Dialog Mensch-Maschine.

Der Anschluß der Tasten bzw. der Tastatur erfolgt über das Folien- bzw. Tastaturkabel. Bisher wird das Tastaturkabelende entweder für direkte oder indirekte Steckverbindungen ausgebildet, wodurch der Einsatz dieser Tastaturen auf stationäre Anwendungen begrenzt ist.

Da eine Verlängerung dieser Kabelverbindung zwischen Tastatur und einem PC mit erheblichen Problemen verbunden ist, z.B. einer Stolpergefahr durch herumliegende Kabel, wurde versucht eine kabellose Verbindung, z.B. zwischen einer Tastatur und einem PC herzustellen.

Aus der US-PS 5081628 ist eine Tastatur bekannt, mit der mittels Lichtsignalen Daten zwischen der Tastatur und einer dazugehörigen Steuereinheit im Computer übertragen werden können.

Sowohl die Tastatur als auch die dazugehörige Steuereinheit weisen bei diesem System jeweils eine Kodier- und Sendeeinrichtung und eine Empfangs- und Dekodiereinrichtung auf. In der Tastatur sind die Kodier- und Sendeeinrichtung und Empfangs- und Dekodiereinrichtung dabei in einer komplizierten Schaltung mit einer Datenvergleichseinrichtung und einem Tastencodepuffer verbunden.

Eine Datenübertragung erfolgt bei dieser Tastatur zeichenweise, d.h. durch Betätigen einer bestimmten Taste auf der Tastatur wird der entsprechende Tastencode im Tastencodegenerator erzeugt und in einem Tastencodepuffer zwischengespeichert und der Kodiereinrichtung übergeben. In dieser wird an das Zeichen die Tastaturadresse angefügt, an den Sender weitergegeben und von dort im Start-Stopbitverfahren an die Steuereinheit gesendet. In der Steuereinheit wird das empfangene Zeichen dekodiert, gespeichert und mit erneuter Adressierung an die Tastatur zurückgesendet.

Das in der Tastatur empfangene Zeichen wird dekodiert und mit dem sich noch im Tastencodepuffer befindlichen Zeichen verglichen und auf Identität in der Vergleichseinrichtung überprüft.

Entspricht das empfangene Datenzeichen nicht den gesendeten, d.h. ist eine Identität nicht vorhanden, wird die Sendung wiederholt, d.h. der oben geschilderte Datentransfer läuft erneut ab.

Sind beide Zeichen gleich, d.h ist eine Identität vom empfangenen und gesendeten Zeichen vorhanden, ruht der Sendeprozess für einen vorbestimmten längeren Zeitraum. Das Ausbleiben einer erneuten Datensendung innerhalb dieses Zeitraums ist das Kriterium für die Steuereinheit, das zuerst empfangene Zeichen als korrekt übertragen zu werten.

Bei dieser Tastatur ist es daher notwendig, zum einen für jede an einem Computer angeschlossene Tastatur eine eigene Steuereinheit mit dazugehöriger Empfangs- und Sendeelektronik vorzusehen, was bei einem Anschluß mehrerer Tastaturen an den Computer erhebliche Hardwarekosten nach sich zieht, zum anderen ist die für diese Tastatur notwendige Steuer- und Vergleichselektronik kompliziert und damit störanfällig.

Weiterhin ist die maximal erzielbare Übertragungsrate an Zeichen relativ gering sowie die Gefahr gegeben, daß bei dem Übertragungsvorgang eine Endlosschleife eintritt, d.h. z.B. bei einer Störung in der Kodiereinrichtung der Tastatur wie z.B. das Kippen an einer Bit-Stelle von logisch "1" auf logisch "0" dazu führen würde, daß beständig das gleiche, inkorrekt kodierte Zeichen an die Steuereinheit übertragen würde, da kein Abbruchkriterium für diesen Fall vorhanden ist.

Der Erfindung liegt daher die Aufgabe zugrunde, eine Tastatur der eingangsgenannten Art zu schaffen, die ohne komplizierte Steuerelektronik und ohne größeren hardwaretechnischen Aufwand bei einer möglichst hohen maximalen Übertragungsrate an Zeichen garantiert, daß keine endlos fehlerhafte Datensendung auftritt und dies bei gleichzeitiger Anschlußmöglichkeit mehrerer Tastaturen an einen Computer.

Diese Aufgabe wird bei einer Tastatur der eingangsgenannten Gattung dadurch gelöst, daß der Sender Datentelegramme sendet, in denen jeweils eine Tastaturadresse enthalten ist und wobei der Empfänger einerseits über einen Adressendekodierer und andererseits über einen die empfangenen Daten bei Übereinstimmung mit einer eigenen, einstellbaren Adresse dem zu bedienenden Gerät zuleitenden Adressenvergleicher verfügt und wobei für jede Taste ein Übertragungskanal vorgesehen ist.

Weitere vorteilhafte Ausgestaltungen der Erfindung sind Gegenstand der Patentansprüche 2 bis 19.

Verfügt der Empfänger über einen die empfangenen Daten entsprechend der dekodierten Adresse einer dieser Adresse zugeordneten Schnittstellenkarte zuleitenden Adressendekodierer und sind in einem PC mehrere Schnittstellenkarten enthalten, so wird dadurch auf einfache und unkomplizierte Art und Weise die Möglichkeit geschaffen, an einen Computer mehrere Tastaturen anzuschließen, bzw. von einer oder mehreren Tastaturen verschiedene zu bedienende Geräte zu steuern.

Werden die Datentelegramme in Impulsform übertragen und werden die Impulse vom Sender in Form von hochfrequenter Schwingungen bestimmter Frequenz ausgesandt und ist im Empfänger ein auf die bestimmte Frequenz abgestimmtes Filter vorgesehen, so ist dadurch eine problemlose und Störunanfällige Datenübertragung zwischen Sender und Empfänger gewährleistet, da eine irrtümliche Auswertung andersgearteter, ungewollter Infrarot-Lichtimpulse verhindert ist.

Enthält der Sender ein Einstellglied für das Tastverhältnis und das Tastverhältnis zwischen 6% und 25% einstellbar und enthält der Empfänger ein automatisch arbeitendes Einstellglied für die Empfindlichkeit (AGC) und sendet der Sender am Anfang seines Datentelegramms einen 2-Bit-Träger zur AGC-Einstellung des Empfängers, so wird dadurch auf einfache und störunanfällige Weise die Möglichkeit geschaffen, Frequenz- und Phasenunterschiede zwischen Sender und Empfänger auszugleichen.

Sendet der Sender in seinem Datentelegramm nach dem 2-Bit-Träger zur AGC-Einstellung des Empfängers ein Startbit und sendet der Sender ein Paritätsbit in seinem Datentelegramm, so wird dadurch auf einfache und problemlose Art und Weise der Empfänger durch das Startbit auf eine Datenübertragung vorbereitet und durch das Paritätsbit eine Fehlererkennung ermöglicht.

Ist ein erster Teil der Tasten bzw. der Übertragungskanäle zur Steuerung des PC vorgesehen und ist ein zweiter Teil der Tasten zur Steuerung der anderen zu bedienenden Geräte vorgesehen, so wird dadurch auf einfache und unkomplizierte Art und Weise ermöglicht, mit der Tastatur nicht nur einen PC sondern auch andere Geräte zu bedienen.

Erfolgt die Übertragung in einer Biphasen-AmplitudenModulation, so wird dadurch eine Einrichtung gewählt, mit der auf einfache und problemlose Art und Weise die Trägerwelle für die Übertragung moduliert werden kann. Ist eine Zeit-Zählschaltung vorgesehen, die durch jede Tastenbetätigung initialisiert wird und die nach Ablauf ihrer charakteristischen Zeit ein Eingabeende signalisiert und einen stromsparenden Bereitschaftsbetrieb einschaltet, so wird dadurch nicht nur der Stromverbrauch der Tastatur auf ein Minium reduziert, sondern auch auf automatische und damit benutzerfreundliche Art und Weise in Übertragungsende signalisiert.

Ist eine Stromversorgung vorgesehen, die entweder durch in der Tastatur integrierte Batterien allein oder in Kombination mit auf ihrer Oberfläche befindlichen Solarzellen in der Weise erfolgt, daß die Batterien erst dann wirksam werden, wenn die Solarzellen nicht mehr ausreichend Strom liefern und ist ein Ladeanschluß für eine wieder aufladbare Batterie vorgesehen, so wird dadurch auf einfache und problemlose Art und Weise ein häufiger und damit kostenintensiver Batteriewechsel vermieden.

Besitzt die Tastatur ein Gehäuse, daß an seinem hinteren, unteren Ende von einem Stützfußpaar in Betriebslage gehalten wird und sind die Kontakte für den Ladeanschluß an wenigstens einem der Füße des Stützfußpaares angeordnet, so wird dadurch auf einfache und problemlose Art und Weise ein Wiederaufladen der entladenen Batterien ermöglicht.

Ist die Tastatur als die Bedieneinheit eine Computermaus aufweisenden Folienmaus ausgestaltet, so wird dadurch auf einfache und unkomplizierte Art und Weise ein Einsatz der Tastatur auch für mausgesteuerte Anwenderprogramme ermöglicht.

Ist ein Folienträger in runder Suppentellerform vorgesehen und sind die Folienkontakte auf die kleine Fläche des tellerförmigen Folienträgers geklebt und ist dessen Suppentellerrand begrenzte, große Fläche zum Ankleben an eine Scheibe eingerichtet und ist ein Folienträger in ovaler Ratentellerform vorgesehen und sind die Folienkontakte auf die kleine Fläche des bratentellerförmigen Folienträgers geklebt und ist dessen Bratentellerrand begrenzte große Fläche zum Ankleben an eine Scheibe eingerichtet, so wird dadurch auf einfache und problemlose Art und Weise die Möglichkeit geschaffen, z.B. durch Aufkleben der Tastatur an ein Schaufenster ein 3-0 Marketing zu betreiben.

### Ausführungsbeispiele

Die Erfindung soll nachstehend an drei in der anliegenden Zeichnung dargestellten Ausführungsbeispiele näher erläutert werden. In der Zeichnung bedeuten:
- Fig. 1: Folienmaus zur Steuerung einer Modelleisenbahn in einem Ausführungsbeispiel nach der Erfindung in schematischer Darstellung;
- Fig.2: Folienmaus zur Steuerung eines PC in einem Ausführungsbeispiel nach der Erfindung in schematischer Darstellung;

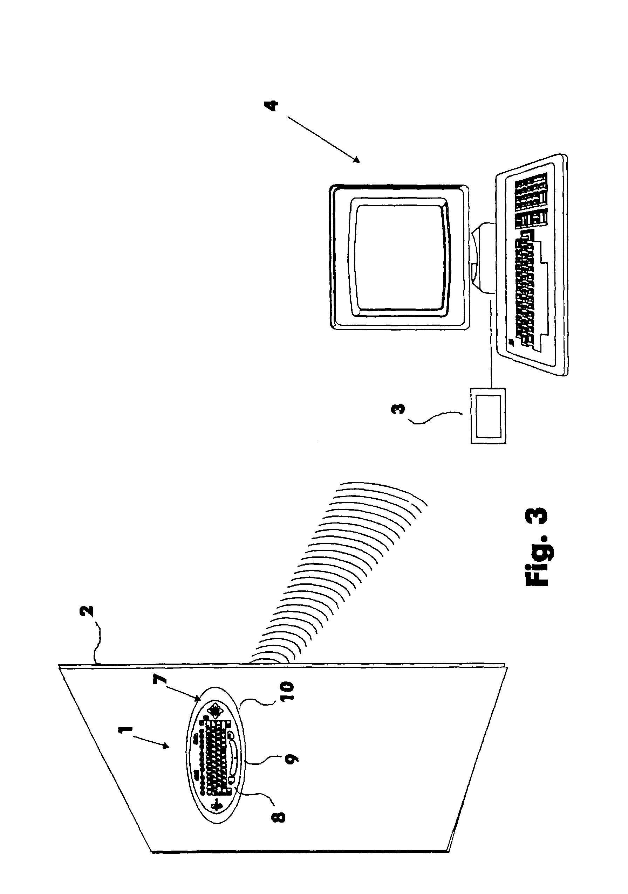

- Fig.3: Folientastatur zur Steuerung eines PC in einem Ausführungsbeispiel nach der Erfindung in schematischer Darstellung;
- Fig.4: Folientastatur zur Steuerung eines PC und eines Exponates in einem Ausführungsbeispiel nach der Erfindung in schematischer Darstellung;
- Fig.5: vier Folientastaturen zur separaten Steuerung jeweils eines PC in einem Ausführungsbeispiel nach der Erfindung in schematischer Darstellung;
- Fig.6: vier Folientastaturen zur Steuerung eines gemeinsamen PC in einem Ausführungsbeispiel nach der Erfindung in schematischer Darstellung;
- Fig.7: zwei Folientastaturen zur Steuerung eines gemeinsamen PC, weibei sich eine in einer Sicherheitszone und die andere in einer Gefahrenzone befindet, in einem Ausführungsbeispiel nach der Erfindung in schematischer Darstellung; und
- Fig.8: zwei Folientastaturen zur Steuerung einer gemeinsamen Gerätschaft in einer Gefahrenzone, in einem Ausführungsbeispiel nach der Erfindung in schematischer Darstellung.

### 1.Folienmaus mit Infrarotsteuerung

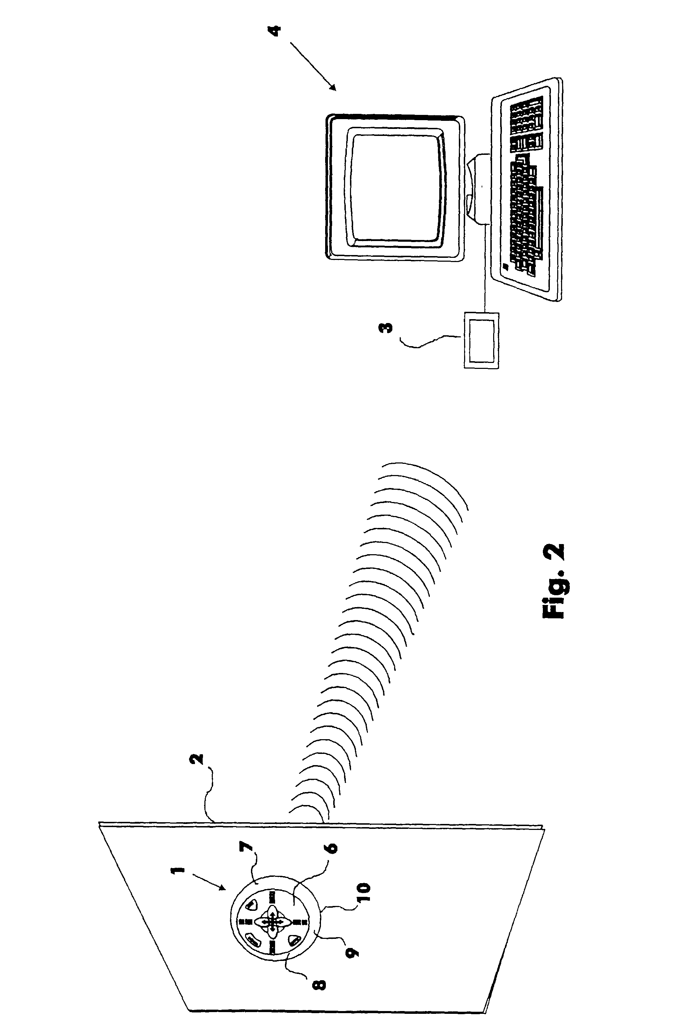

Die Folienmaus 1 wird mit einem Infrarotsender bestückt und an der Außenfläche einer Scheibe 2, beispielsweise einem Schaufenster, befestigt. Das erfolgt zweckmäßigerweise mit einer Klebefolie. Damit bildet die Folienmaus 1 eine Computermaus nach. Die Energieversorgung erfolgt entweder durch eine Knopfzelle allein oder durch Kombination einer Knopfzelle mit einer Solarzelle, wobei die Knopfzelle dann Strom liefert, wenn nicht genügend Strom durch die Solarzelle erzeugt wird. Das Empfangsteil 3 ist über einen Norm-Stecker (z.B. T-Stecker) mit dem Tastaturanschluß eines Computers 4 verbunden, der wie in Fig.2 gezeigt, wahlweise von innen und außen bedient werden kann. So wird beispielsweise ein Schaufenster 2 zu einem 'Showfenster', da der Kunde von außen die Demoprogramme oder Spiele 'vorführt'. Damit wird der Werbeeffekt einer Auslage 5 verstärkt, denn die angelockten Zuschauer sehen alle Artikel der Auslage. Damit können sich die Kunden auch außerhalb der gesetzlichen Ladenschlußzeiten ausführlich informieren.

Bei der an der Außenfläche des Schaufensters 2 angebrachten Folienmaus 1 ist die, die Kontakte (Druckkontakte) inkorporierende selbstklebende Folie 6 auf einem kreisrunden Plastikgehäuse 7 aufgeklebt, das die Form und Größe eines Suppentellers hat. Das Plastikgehäuse 7 trägt die Folientastatur 6 auf seiner Außenseite in einer Vertiefung, so daß die Folientastatur mit einem die Vertiefung umgebenden Rand 8 bündig abschließt. Nach außen hin geht der Rand 8 in eine relativ flach verlaufende Schräge 9 über, so daß sich der Durchmesser zum Schaufenster 2 hin aufweitet. Die schaufensterseitige Kante 10 der Schräge 9 des Plastikgehäuses 7 umschließt eine kreisrunde Befestigungsplatte, die gehäuseseitig durch Anschlag- und Schraubdome befestigt ist.

Das tellerförmige Plastikgehäuse 7 umschließt eine Elektronikplatine zur Signalaufbereitung für die ebenfalls dort untergebrachte IR-Sendediode und einen Batterieblock zur Stromversorgung der Folienmaus 1. Die Befestigungsplatte ist im Bereich der IR-Sendediode durch ein Loch auf dem Sendeweg durch die Schaufensterscheibe 2 lichtdurchlässig.

Die Befestigungsplatte ist schaufensterseitig mit einer beidseitig klebenden Folie versehen, die nach Abziehen einer Schutzschicht an das Schaufenster 2 zu kleben ist.

### 2. Infrarotschließsystem

Eine Folientaster-Fernbedieneinheit wird in Form eines Foliennummernblocks ausgebildet und an dem zu sichernden Objekt von außen befestigt. Im Innern des Objektes befindet sich der Empfangsteil. Damit können leicht flexible Sicherheitsbereiche geschaffen werden, und zwar bevorzugt dort, wo keine Unterputzmontage oder andere Befestigung möglich oder gewünscht ist. Das können hochwertige Außenfassaden sein, Objekte, die nur angemietet wurden oder Objekte, in denen durch Umbau oder Renovierungsarbeiten nur eine vorübergehende Nutzung einzelner Bereiche erfolgt. Solche flexiblen Sicherheitsbereiche können in Hotels (VIP-Bereich, Kongreßzentren), in Konzernen und Werkbereichen oder auf Messeständen geschaffen werden. Die Einsatzbereiche können u.a. sein: Wohn- und Geschäftsgebäude, Einzelhandelsgeschäfte, Warenhausketten, Verwaltungen, Forschung, Technik und Entwicklung.

3.Folientastatur mit Infrarotsteuerung und Empfangsteil mit 102 Tasten In diesem Beispiel ist die von außen zu befestigende Folientaster-Fernbedieneinheit der Tastatur 6', 1' eines PC mit 102 Tasten nachgebildet. Der Anschluß des Empfangsteils 3 und die Stromversorgung erfolgen wie in Beispiel 1 beschrieben. Bevorzugte Einsatzbereiche sind EDV-Einzelhandelsgeschäfte, die vom Außenteil ihrer Schaufenster 2 anspruchsvolle Demoprogramme bedienen lassen und damit 3 D-Marketing betreiben können.

Die an der Außenfläche des Schaufensters 2 angebrachte Folientastatur 6' ist auf einem ovalen Plastikgehäuse 7' aufgeklebt, das die Form und Größe eines Bratentellers beim Eßgeschirr hat. Das Plastikgehäuse 7' trägt die Folientastatur 6' auf seiner Außenseite in einer Vertiefung, so daß die Folientastatur mit einem die Vertiefung umgebenden Rand 8' bündig abschließt. Nach außen hin geht der Rand 8' in eine relativ flach verlaufende Schräge 9' über, so daß sich der Durchmesser zum Schaufenster 2 hin aufweitet. Die schaufensterseitige Kante 10' der Schräge 9' des Plastikgehäuses 7' umschließt eine Befestigungsplatte, die gehäuseseitig durch Anschlag- und Schraubdome befestigt ist. Die Befestigungsplatte ist im Bereich der IR-Sendediode durch ein Loch auf dem Sendeweg durch die Schaufensterscheibe 2 lichtdurchlässig.

Das Plastikgehäuse 7' umschließt eine Elektronikplatine zur Signalaufbereitung für die ebenfalls dort untergebrachte IR-Sendediode und einen Batterieblock zur Stromversorgung der Tastatur 6'.

Wie auch beim ersten Ausführungsbeispiel ist die Befestigungsplatte schaufensterseitig mit einer beidseitig klebenden Folie versehen, die nach Abziehen einer Schutzschicht an das Schaufenster 2 zu kleben ist.

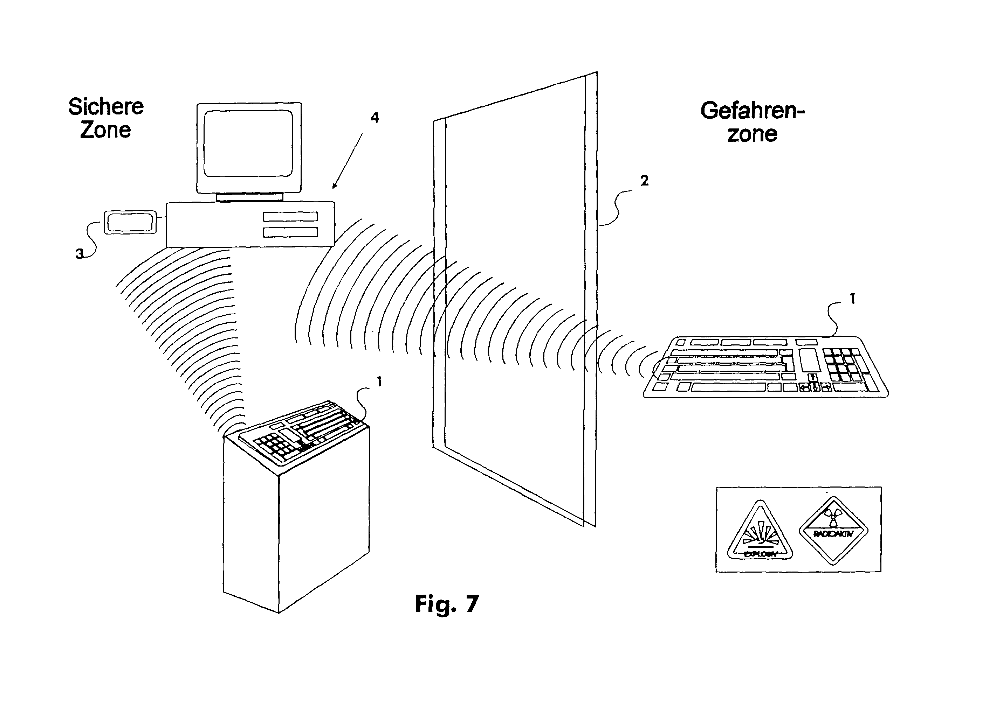

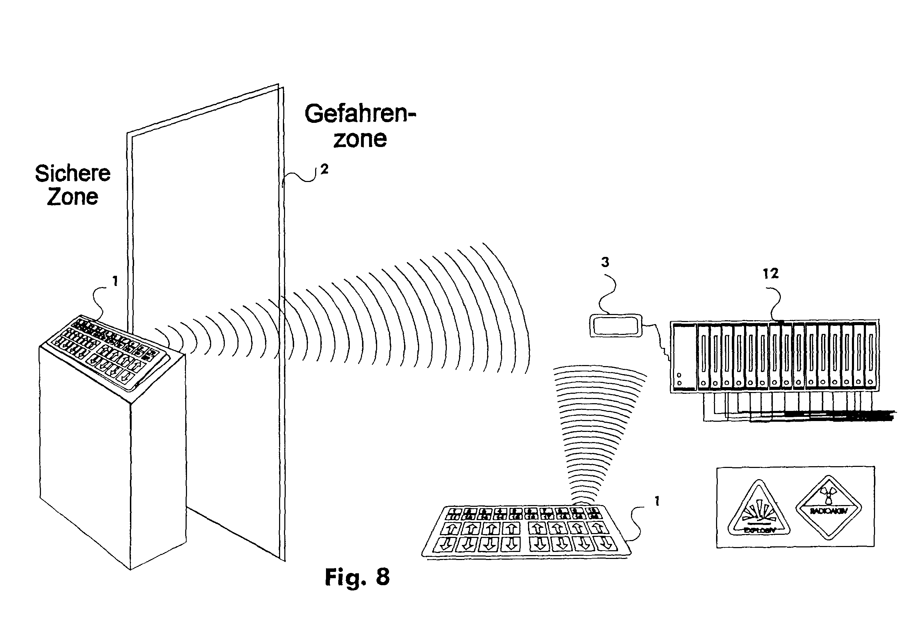

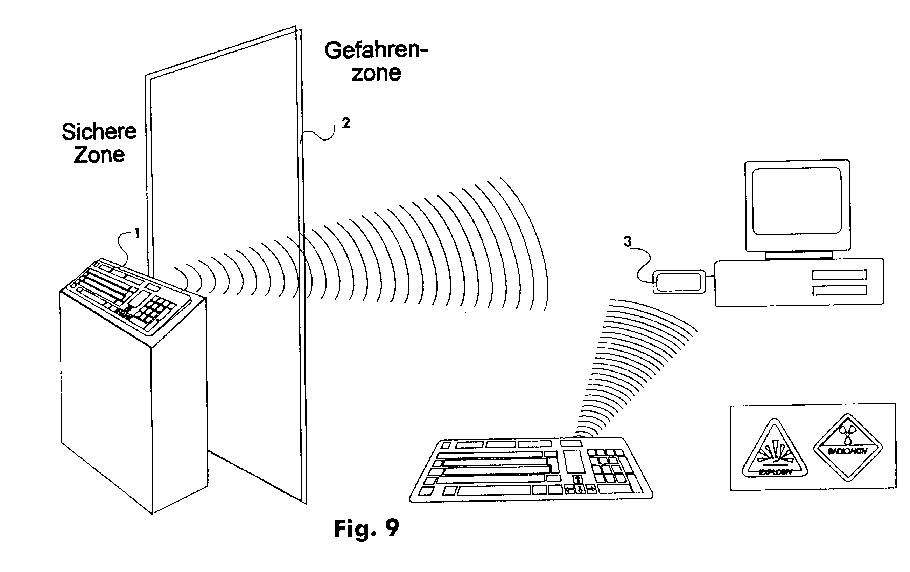

Aber auch in exponierten Objekten von Wissenschaft und Forschung, in denen hochwertige Computer und Gerätschaften einer komplexen Gerätesteuerung staub-, wasser- und strahlengeschützt betrieben werden müssen, können die o.g. folientaster-fernbedienten Tastaturen eingesetzt werden, wie in den Figuren 7 und 8 dargestellt. Gleichermaßen lassen sich auf Quarantänestationen von Patienten, die sich in besonders geschützten und kontaminationsgefährdeten Räumen aufhalten müssen, hinter einer durchsichtigen Abtrennung 2 befindliche Computer 4' betreiben.

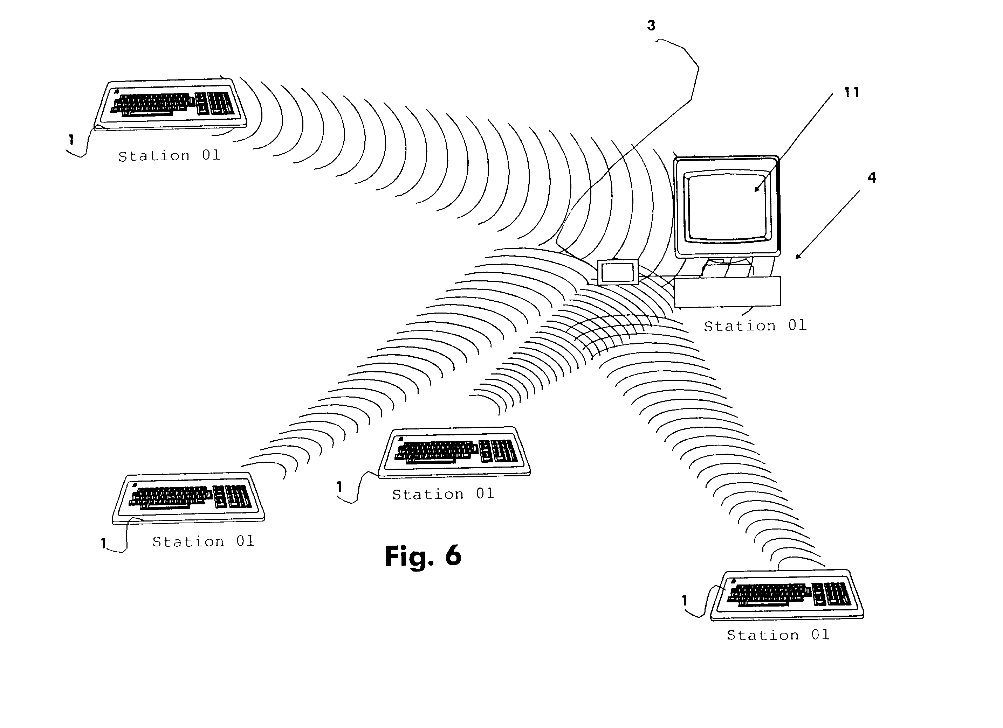

Darüber hinaus kann die Tastatur 6' mit 102 Tasten auch zu PC-Schulungszwecken verwendet werden, wobei ein einziger PC 4' mit einem vozugsweise großen Bildschirm 11 vorgesehen ist und wobei jeder Teilnehmer eine individuelle Tastatur 6' benutzt, wie in Fig.6' dargestellt. Der PC 4' ist netzwerkfähig und besitzt ebenso viele Schnittstellenkarten wie Tastaturen 6' verwendet werden. In jede Tastatur 6' ist ein Sender eingebaut, dessen rundum strahlende Infrarotsendediode aus dem Gehäuse 7' herausragt.

Der Sender sendet Datenpakete, in denen jeweils eine Tastaturadresse enthalten ist, und in dem Empfänger 3 sind Adressendekodierer vorgesehen, die die empfangenen Daten entsprechend der dekodierten Adresse jeweils zu einer Schnittstellenkarte leiten, die dieser Adresse zugeordnet ist. Die Datentelegramme wertden in Impulsform übertragen, wobei die Impulse vom Sender in Form hochfrequenter Schwingungen einer bestimmten Frequenz ausgesandt werden. In dem Empfänger 3 ist ein auf diese bestimmte Frequenz abgestimmtes Filter vorgesehen, das die irrtümliche Auswertung andersgearteter, ungewollter Infrarot-Lichtimpulse verhindert.

Der Empfänger 3 enthält ein automatisch arbeitendes Einstellglied für die Empfindlichkeit (AGC), und der Sender sendet zu Beginn seines Impulstelegramms einen 2-Bit-Träger, mit dem im Empfänger die AGC-Einstellung vorgenommen wird. Bei nicht ausreichender Lichtstärke am Empfängereingang kann das Tastverhältnis der Impuls senderseitig in Stufen zwischen von 6% über 12% bis zu 25% eingestellt werden.

Die Tasten der Tastatur 6' sind zeilen- und spaltenweise zu einer Matrix angeordnet, die von einem Oszillator der Tastatur im 2-KHz-Takt abgefragt wird. Für jede Taste ist ein eigener Kanal vorgesehen, und es wird ein 8-Bit-Tastencode verwendet.

Mit dem Impulstelegramm wird auch ein Paritätsbit übertragen, das empfängerseitig der Paritätskontrolle dient, d.h., der Prüfung auf eine gerade Einer-Bitzahl.

Bei der Übertragung der Impulsteleramme wird die Biphasen-Amplitudenmodulation angewandt.

Die Tastatur 6' enthält auch eine Zeit-Zählerschaltung, die bei jeder Tastenbetätigung nachgetriggert wird, um die Zählung von neuem zu beginnen. Die Zeit-Zählschaltung steuert die Stromversorgung für den Sendebetrieb der Tastatur 6', bei dem Ströme in der Größenordnung von 1A auftreten. Nach Ablauf einer charakteistischen Zeit der Zeit-Zählschaltung, während der keine Tastenbetätigung erfolgt ist, fällt ein Signal zur Stromversorgung für den Sendebetrieb ab, wodurch ein 'Sleep-Modus', d.h., ein Bereitschaftsbetrieb eingestellt wird, bei dem die Tastatur auch weiterhin im 2-KHz-Takt abgefragt wird, wobei die Stromaufnahme in den µA-Bereich zurückgeht.

In alternativer Ausgestaltung des Empfängers 3 ist in diesem ein einziger Adressendekoierer vorgesehen, der die Daten aus dem empfangenen Datentelegramm nur dann zum PC 4 weiterleitet, wenn die dekodierte Adresse der eigenen entspricht, auf die er mit einem von der Unterseite des Empfängers 3 zugänglichen Schalter eingestellt worden ist.

Die zuvor beschriebenen Einrichtung kann auch zur Demonstration der Arbeitsweise eines Netzwerks benutzt werden, in dem beispielsweise ein über zwei PC4 laufender Brief vorgeführt wird.

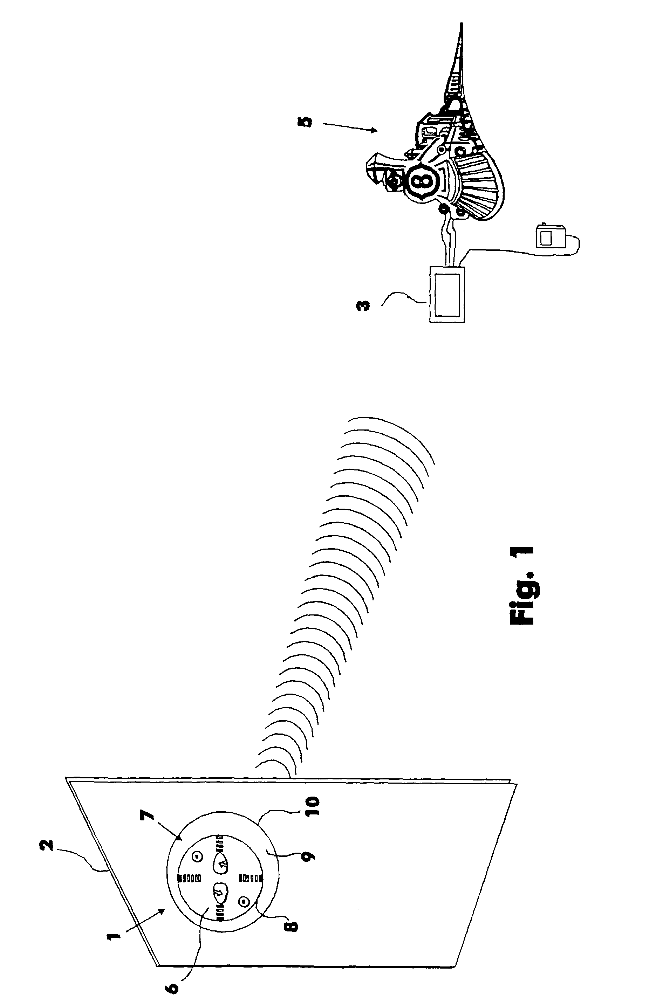

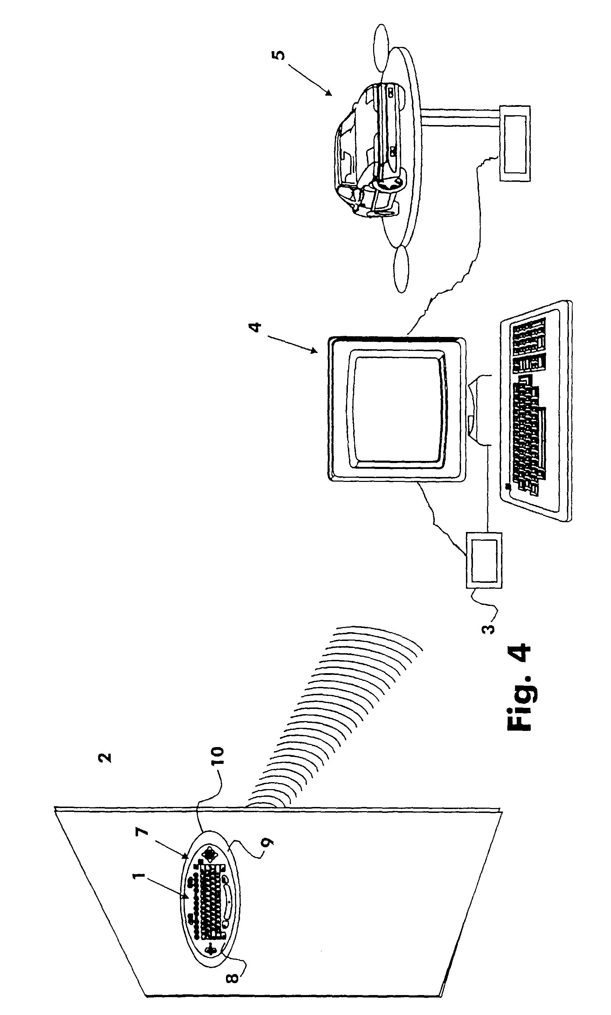

Von den über die Tastatur 6' verfügbaren 102 Kanälen können die in der oberen Zeile angeordneten 16 Tasten zur Hardware-Steuerung benutzt werden, beispielweise um Lampen oder Display-Motore steuernd zu betätigen, wie in den Figuren 1, 4 und 8 dargestellt.

Mit dem Impulstelegramm wird auch ein Paritätsbit übertragen, das empfängerseitig der Paritätskontrolle dient, d.h., der Prüfung auf eine gerade Einer-Bitzahl.

Bei der Übertragung der Impulstelegramme wird die Biphasen-Amplitudenmodulation angewandt.

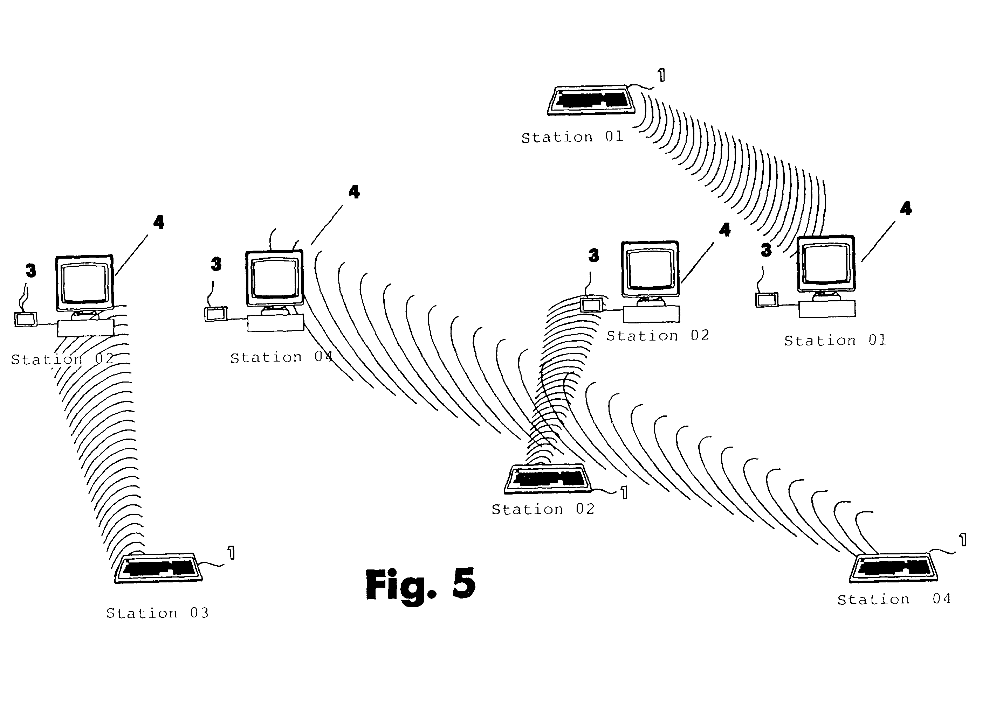

Für den Betrieb der Tastatur 6' im Büro (vgl. Fig.5) wertden bevorzugt wiederaufladbare Batterien mit nach außen geführten Anschlüssen zum Nach- oder Aufladen eingesetzt. Die Anschlüsse sind an Kontakte gführt, die an den hinteren Tastaturfüßen angeordnet sind.

Der solchermaßen eingerichtete Empfänger 3 ist, wie die normale Tastatur, mit dem PC 4 steckverbunden und wird aufgrund gleicher Schnittstelleneigenschaften vom PC 4 als Tastatur 1' akzeptiert. An Stelle dieses Empfängers 3 kann jederzeit auch wieder die normale Tastatur mit dem PC 4' verbunden werden.

## Patentansprüche

1. Tastatur (1, 1', 6, 6'), insbesondere Folientastatur, zur Ansteuerung von zu bedienenden Geräten (4, 5, 12), mit einer zeilen- und spaltenweise abfragbaren Tastenmatrix, insbesondere zur Ansteuerung eines PC [Personal Computer] (4, 4'), wobei zur Bedienung erforderliche Ansteuersignale von einem der Tastatur (1, 1', 6, 6') zugeordneten Sender und einem dem zu bedienenden Gerät (4, 5, 12) zugeordneten Empfänger (3) drahtlos durch im Infrarotbereich liegende Lichtimpulse übertragbar sind, wobei der Sender Datentelegramme sendet, in denen jeweils eine Tastaturadresse enthalten ist, und wobei der Empfänger (3) einerseits über einen Adressendekodierer und andererseits über einen die empfangenen Daten bei Übereinstimmung mit einer eigenen, einstellbaren Adresse dem zu bedienenden Gerät (4, 5, 12) zuleitenden Adressenvergleicher verfügt und wobei für jede Taste ein Übertragungskanal vorgesehen ist.

2. Tastatur nach Anspruch 1, zur Ansteuerung eines netzwerkfähigen PC, dadurch gekennzeichnet, daß deren Empfänger (3) über einen die empfangenen Daten entsprechend der dekodierten Adresse einer dieser Adresse zugeordneten Schnittstellenkarte zuleitenden Adressendekodierer verfügt.

3. Tastatur nach Anspruch 2, **dadurch gekennzeichnet**, daß in einem PC (4) mehrere Schnittstellenkarten enthalten sind.

4. Tastatur nach einem der vorstehenden Ansprüche, **dadurch gekennzeichnet,** daß die Datentelegramme in Impulsform übertragen werden, deren Impulse vom Sender in Form hochfrequenter Schwingungen bestimmter Frequenz ausgesandt werden und daß im Empfänger (3) ein auf die bestimmte Frequenz abgestimmtes Filter vorgesehen ist.

5. Tastatur nach einem der vorstehenden Ansprüche, **dadurch gekennzeichnet**, daß der Sender ein Einstellglied für das Tastverhältnis enthält.

6. Tastatur nach Anspruch 5, **dadurch gekennzeichnet,** daß das Tastverhältnis zwischen 6 % und 25 % einstellbar ist.

7. Tastatur nach einem der vorstehenden Ansprüche, **dadurch gekennzeichnet**, daß der Empfänger (3) ein automatisch arbeitendes Einstellglied für die Empfindlichkeit [AGC] enthält und daß der Sender am Anfang seines Datentelegramms einen 2- Bit- Träger zur AGC- Einstellung des Empfängers (3) sendet.

8. Tastatur nach Anspruch 7, **dadurch gekennzeichnet,** daß der Sender in seinem Datentelegramm nach dem 2- Bit-Träger zur AGC- Einstellung des Empfängers (3) ein Startbit sendet.

9. Tastatur nach einem der vorstehenden Ansprüche, **dadurch gekennzeichnet,** daß der Sender ein Paritätsbit in seinem Datentelegramm sendet.

10. Tastatur nach einem der vorstehenden Ansprüche, **dadurch gekennzeichnet,** daß ein erster Teil der Tasten bzw. der Übertragungskanäle zur Steuerung des PC (4) und daß ein zweiter Teil der Tasten zur Steuerung der anderen zu bedienenden Geräte (5, 12) vorgesehen ist.

11. Tastatur nach einem der vorstehenden Ansprüche, **dadurch gekennzeichnet**, daß die Übertragung in einer Biphasen-Amplitudenmodulation erfolgt.

12. Tastatur nach einem der vorstehenden Ansprüche, **gekennzeichnet durch** ein Zeit- Zählschaltung, die durch jede Tastenbetätigung initialisiert wird und die nach Ablauf ihrer charakteristischen Zeit ein Eingabeende signalisiert und einen stromsparenden Bereitschaftsbetrieb einschaltet.

13. Tastatur nach einem der vorstehenden Ansprüche, **gekennzeichnet durch** eine Stromversorgung, die entweder durch in der Tastatur (1, 1') integrierte Batterien allein oder in Kombination mit auf ihrer Oberfläche befindlichen Solarzellen in der Weise erfolgt, daß die Batterien erst dann wirksam werden, wenn die Solarzellen nicht mehr ausreichend Strom liefern.

14. Tastatur, insbesondere zur Verwendung im Büro, nach Anspruch 13, **gekennzeichnet durch** einen Ladeanschluß für eine wiederaufladbare Batterie.

15. Tastatur nach Anspruch 14, **dadurch gekennzeichnet**, daß die, das Gehäuse hinten in Betriebslage haltenden Füße des Stützfußpaares mit Kontakten für den Ladeanschluß ausgestattet sind.

16. Tastatur nach einem der vorstehenden Ansprüche, **dadurch gekennzeichnet**, daß diese als die Bedieneinheit einer eine Computermaus aufweisenden Folienmaus (1) ausgestaltet ist.

17. Tastatur nach Anspruch 16, **gekennzeichnet durch** einen Folienträger (7) in runder Suppentellerform, deren Folienkontakte auf die kleinen Fläche des tellerförmigen Folienträgers (7) geklebt sind und dessen suppentellerrandbegrenzte, große Fläche zum Ankleben an eine Scheibe (2) eingerichtet ist.

18. Tastatur nach einem der vorstehenden Ansprüche, **dadurch gekennzeichnet,** daß diese als Foliennummernblock ausgebildet ist und für die Erstellung flexibler Sicherheitsbereiche verwendbar ist.

19. Tastatur nach Anspruch 18, **gekennzeichnet durch** einen Folienträger (7) in ovaler Bratentellerform, deren Folienkontakte (6) auf die kleinen Fläche des bratentellerförmigen Folienträgers (7) geklebt sind und dessen bratentellerrandbegrenzte, große Fläche zum Ankleben an eine Scheibe (2) eingerichtet ist.

## Claims

1. A keyboard (1, 1', 6, 6'), in particular a membrane keyboard for selecting devices (4, 5, 12) to be operated, with a key matrix able to be queried by line or by column, in particular for selecting a PC [personal computer] (4, 4') in which selection signals required for operation are transmissible in a wireless way by light pulses in the infrared range, between a transmitter allocated to the keyboard (1, 1', 6, 6') and a receiver (3) allocated to the device (4, 5, 12) to be operated; with the sender sending data telegrams each of which contains a keyboard address; and with the receiver (3) comprising on the one hand an address decoder and on the other hand an address comparator which if the data corresponds with its own configurable address, transmits the received data to the device (4, 5, 12) to be operated; and in which a communication channel is provided for each key.

2. A keyboard according to claim 1, for selecting a networkable PC, characterised in that its receiver (3) comprises an address decoder which directs the received data to an interface card allocated to this address, in accordance with the decoded address.

3. A keyboard according to claim 2, **characterised in that** several interface cards are contained in a PC (4).

4. A keyboard according to one of the preceding claims, **characterised in that** the data telegrams are transmitted in impulse form, their impulses are emitted by the transmitter in the form of highfrequency oscillations of a specified frequency, and that in the receiver (3) a filter attuned to the specified frequency is provided.

5. A keyboard according to one of the preceding claims, **characterised in that** the transmitter comprises an adjustment element for the mark-to-space ratio.

6. A keyboard according to claim 5, **characterised in that** the mark-to-space ratio is adjustable between 6 % and 25 %.

7. A keyboard according to one of the preceding claims, **characterised in that** the receiver (3) comprises an automatically operating adjustment element for sensitivity [AGC] and that at the beginning of its data telegram the transmitter transmits a 2-bit carrier for AGC adjustment of the receiver (3).

8. A keyboard according to claim 7, **characterised in that** in its data telegram, after the 2-bit carrier for AGC adjustment of the receiver (3), the transmitter transmits a start bit.

9. A keyboard according to one of the preceding claims, **characterised in that** in its data telegram the transmitter transmits a parity bit.

10. A keyboard according to one of the preceding claims, **characterised in that** a first part of the keys or of the communications channels is provided for controlling the PC (4) and that a second part of the keys is provided for controlling the other devices (5, 12) to be operated.

11. A keyboard according to one of the preceding claims, **characterised in that** the transmission takes place in biphase amplitude modulation.

12. A keyboard according to one of the preceding claims, **characterised by** a timing circuit which is initialised by each activation of a key and which after expiry of its characteristic time, signals an input end and switches on a power-saving standby mode.

13. A keyboard according to one of the preceding claims, **characterised by** a power supply which is either provided by batteries integrated in the keyboard (1, 1') on their own or in combination with solar cells located at the surface of the said keyboard (1, 1'), in such a way that the batteries only take over when the solar cells no longer provide adequate power.

14. A keyboard, in particular for office use, according to claim 13, **characterised by** a charge connection for a rechargeable battery.

15. A keyboard according to claim 14, **characterised in that** the feet of the pair of supporting feet retaining the housing in operating position at the rear, comprise contacts for the charge connection.

16. A keyboard according to one of the preceding claims, **characterised in that** it is configured as the operating element of a membrane mouse (1) comprising a computer mouse.

17. A keyboard according to claim 16, **characterised by** a membrane support (7) in the shape of a round soup plate whose membrane contacts are bonded onto the small surface of the plate-shaped membrane support (7) and whose large surface, delimited by the rim of the "soup-plate", is configured to be bonded onto a disc (2).

18. A keyboard according to one of the preceding claims, c**haracterised in that** it is configured as a membrane-number-field able to be used for creating flexible security zones.

19. A keyboard according to claim 18, **characterised by** a membrane support (7) in the shape of an oval serving plate whose membrane contacts (6) are bonded onto the small surface of the serving-plate-shaped membrane support (7) and whose large surface, delimited by the rim of the "serving-plate", is configured to be bonded onto a disc (2).

## Revendications

1. Clavier (1, 1', 6, 6'), notamment clavier à touches à membrane, destiné à la commande d'appareils (4, 5, 12) à conduire, avec une matrice de touches interrogeable par ligne et par colonne, destiné notamment à la commande d'un PC [micro-ordinateur] (4, 4'), sur lequel les signaux de commande nécessaires à la conduite de l'appareil peuvent être transmis sans fil par l'intermédiaire d'impulsions lumineuses IR entre un émetteur affecté au clavier (1, 1', 6, 6') et un récepteur (3) affecté à l'appareil (4, 5, 12) à conduire, l'émetteur envoie des télégrammes de données contenant chacun une adresse de clavier, le récepteur (3) est pourvu d'un décodeur d'adresses d'une part et d'un comparateur d'adresses d'autre part, lequel amène à l'appareil (4, 5, 12) à conduire les données reçues lorsqu'elles coïncident avec une adresse propre modifiable, et sur lequel une voie de transmission est prévue pour chaque touche.

2. Clavier selon la revendication 1, pour la commande d'un PC apte à accéder au réseau, **caractérisé en ce** que son récepteur (3) est pourvu d'un décodeur d'adresses, lequel amène les données reçues à une carte interface affectée à l'adresse qu'il vient de décoder.

3. Clavier selon la revendication 2 **caractérisé en ce** qu'un PC (4) comprend plusieurs cartes interfaces.

4. Clavier selon l'une des revendications précédentes **caractérisé en ce** que les télégrammes de données sont transmis sous forme d'impulsions, lesquelles sont envoyées par l'émetteur sous forme d'oscillations à haute fréquence et de fréquence déterminée et en ce qu'on a prévu de pourvoir le récepteur (3) d'un filtre correspondant à cette fréquence déterminée.

5. Clavier selon l'une des revendications précédentes **caractérisé en ce** que l'émetteur comprend un membre permettant de régler le taux d'impulsions.

6. Clavier selon la revendication 5 **caractérisé en ce** que la plage de réglage du taux d'impulsions est comprise entre 6 % et 25 %.

7. Clavier selon l'une des revendications précédentes **caractérisé en ce** que le récepteur (3) comprend un membre de réglage du gain [CAG] fonctionnant automatiquement et en ce que l'émetteur émet au début de son télégramme de données un porteur 2 bits destiné au réglage CAG du récepteur (3).

8. Clavier selon la revendication 7 **caractérisé en ce** que, dans son télégramme de données, l'émetteur émet un bit départ après le porteur 2 bits de réglage CAG du récepteur (3).

9. Clavier selon l'une des revendications précédentes **caractérisé en ce** que l'émetteur émet un bit de parité dans son télégramme de données.

10. Clavier selon l'une des revendications précédentes **caractérisé en ce** qu'une première partie des touches et des voies de transmission est destinée à la commande du PC (4) et qu'une seconde partie des touches est destinée à la commande des autres appareils (5, 12) à conduire.

11. Clavier selon l'une des revendications précédentes **caractérisé en ce** que la transmission se déroule en modulation d'amplitude de phase bivalente.

12. Clavier selon l'une des revendications précédentes **caractérisé par** un circuit de chronométrage, lequel est initialisé à chaque fois qu'on actionne une touche et lequel, au terme du laps de temps caractéristique, signalise une fin d'entrée et déclenche un mode de veille à faible consommation électrique.

13. Clavier selon l'une des revendications précédentes **caractérisé par** un circuit électrique alimenté soit par les piles intégrées dans le clavier (1, 1') seules, soit en combinaison avec des cellules solaires placées sur sa surface, les piles ne dégageant alors de l'énergie que lorsque les cellules solaires ne peuvent plus fournir suffisamment de courant.

14. Clavier, notamment pour un usage en bureau, selon la revendication 13, **caractérisé par** une prise de mise en charge destinée à une pile rechargeable.

15. Clavier selon la revendication 14 **caractérisé en ce** que les pieds faisant partie de la paire de pieds d'appui et soutenant à l'arrière le boîtier en position de service sont équipés de contacts pour la prise de mise en charge.

16. Clavier selon l'une des revendications précédentes **caractérisé en ce** qu'il est conçu comme l'unité de commande d'une souris à membrane (1) présentant une souris d'ordinateur.

17. Clavier selon la revendication 16 **caractérisé par** un support à membrane (7) ayant la forme d'une assiette creuse ronde, et dont les contacts à membrane sont collés sur la petite surface de ce support à membrane (7) en forme d'assiette, la grande surface de ce support (7) délimitée par le bord de cette structure en assiette creuse étant aménagée de façon à adhérer à une vitre (2).

18. Clavier selon l'une des revendications précédentes **caractérisé en ce** qu'il est conçu comme un pavé numérique à membrane et peut être utilisé pour l'élaboration de zones de sécurité flexibles.

19. Clavier selon la revendication 18 **caractérisé par** un support à membrane (7) en forme de plat à four ovale, et dont les contacts à membrane sont collés sur la petite surface de ce support à membrane (7) en forme de plat à four, la grande surface de ce support (7) délimitée par le bord de cette structure en plat à four est aménagée de façon à adhérer à une vitre (2).
